# EUROPEAN PATENT APPLICATION

(11) **EP 4 773 065 A1**
(43) Date of publication of application: **08.07.2026**
(21) Application number: 24928724.4
(22) Date of filing: 13.12.2024
(51) Int. Cl.: G06Q 30/02, H04N 21/24, H04N 21/2668

(54) **ELECTRONIC DEVICE AND CONTROL METHOD THEREOF**

(30) Priority: 04.03.2024 KR 20240030790
(71) Applicant: Samsung Electronics Co., Ltd., Suwon-si, Gyeonggi-do 16677 (KR)
(72) Inventor: HWANG, Euihyeon, Suwon-si Gyeonggi-do 16677 (KR)
(74) Representative: Walaski, Jan Filip
(86) International application number: PCT/KR2024/096973
(87) International publication number: WO 2025/187927

(57) **Abstract**

An electronic apparatus including a communication device configured to communicate with an external apparatus; memory; and at least one processor is configured to control the communication device to obtain a first advertisement content, control the communication device to provide information on exposure time of the obtained first advertisement content and identification information corresponding to the obtained first advertisement content to a server, and based on receiving advertisement information related to the obtained first advertisement content, control the communication device to obtain a second advertisement content based on the received advertisement information.

## Description

### [BACKGROUND OF THE INVENTION]

### [Field of the Invention]

The embodiments of the disclosure relate to an electronic apparatus and a method for controlling thereof, and more particularly, to an electronic apparatus that can additionally provide an advertisement content associated with an advertisement content if user interest for the advertisement content is identified, and a method for controlling thereof.

### [Description of the Related Art]

An electronic apparatus performs operations of generating and displaying an image, etc., or providing an image to a display apparatus that displays images. Such an electronic apparatus can not only display a specific content selected by a user as described above, but can also display various types of information.

In particular, recent electronic apparatuses are also displaying various advertisements together. Here, advertising is an activity in which companies or individuals or organizations perform investment to achieve an intended goal by publicizing products or services, etc., and recently, advertisements are being applied not only to traditional media such as broadcasting and newspapers, but also various media such as web services, application services, etc.

### [SUMMARY]

Aspects of embodiments of the disclosure will be set forth in part in the description which follows and, in part, will be apparent from the description, or may be learned by practice of the presented embodiments.

According to an embodiment of the present disclosure, an electronic apparatus includes a communication device configured to communicate with an external apparatus; memory; and at least one processor is configured to control the communication device to obtain a first advertisement content, control the communication device to provide information on exposure time of the obtained first advertisement content and identification information corresponding to the obtained first advertisement content to a server, and based on receiving advertisement information related to the obtained first advertisement content, control the communication device to obtain a second advertisement content based on the received advertisement information.

According to an embodiment of the present disclosure, the electronic apparatus may further include a display. The at least one processor may be configured to control the display to output the obtained first advertisement content. The information on the exposure time may include information on a first time during which the obtained first advertisement content was output on the display, and information on a second time during which a focus was maintained on the obtained first advertisement content output on the display.

According to an embodiment of the present disclosure, the at least one processor may be configured to, based on change of a location of a cursor on the display by a received user input, obtain the information on the second time corresponding to a time during which the cursor was maintained on a location of the obtained first advertisement content output on the display.

According to an embodiment of the present disclosure, the obtained advertisement content may be a video content. The at least one processor may be configured to, based on a cursor output on the display being located by a received user input on a location of the obtained first advertisement content, controlling the video content corresponding to the first advertisement content to be output on the display.

According to an embodiment of the present disclosure, the at least one processor may be configured to obtain the exposure time information based on a weight corresponding to at least one of a selection command for the obtained first advertisement content, video reproduction time of the obtained first advertisement content, screen size of the obtained first advertisement content, or a display location of the obtained first advertisement content.

According to an embodiment of the present disclosure, the received advertisement information may include, based on the exposure time of the obtained first advertisement content being greater than a predetermined value, address information of a second advertisement content having at least one of an attribute or classification corresponding to the obtained first advertisement content.

According to an embodiment of the present disclosure, the electronic apparatus may further include a display. The at least one processor may be configured to, based on the exposure time of the obtained first advertisement content being greater than a predetermined value, control the communication device to request and obtain a new advertisement content related to the obtained first advertisement content, and, based on receiving a user input corresponding to movement to an area of no output, control the display to output the obtained new advertisement content output.

According to an embodiment of the present disclosure, the at least one processor may be configured to, during generation of an image corresponding to a content selected by a user, control the communication device to transmit identification numbers and exposure time information of each advertisement content included in an image including the obtained first advertisement content to the server, control the communication device to obtain updated advertisement content, and store the obtained updated advertisement content in the memory.

According to an embodiment of the present disclosure, the electronic apparatus may further include a display. The image including the obtained first advertisement content may be a home screen output on the display. The obtained first advertisement content may be located in a predetermined area inside the home screen.

According to an embodiment of the present disclosure, provided is a method of controlling an electronic apparatus including a communication device configured to communicate with an external apparatus, and a display, the method including obtaining information on exposure time of a first advertisement content output on the display; providing identification information corresponding to the first advertisement content to a server through the communication device; obtaining advertisement information related to the first advertisement content through the communication device; and obtaining a second advertisement content based on the obtained advertisement information through the communication device.

According to an embodiment of the present disclosure, the information on the exposure time may include information on a first time during which the first advertisement content was output on the display, and information on a second time during which a focus was maintained on the first advertisement content output on the display.

According to an embodiment of the present disclosure, the obtaining the exposure time information may include, based on change of a location of a cursor on the display by a received user input, obtaining the information on the second time corresponding to a time during which the cursor was maintained on a location of the first advertisement content output on the display.

According to an embodiment of the present disclosure, the advertisement content may be a video content. The method may further include, based on a cursor on the display being located by a received user input on the location of the first advertisement content, outputting the video content corresponding to the first advertisement content on the display.

According to an embodiment of the present disclosure, provided is a non-transitory computer-readable recording medium storing a program for executing a controlling method of an electronic apparatus including a communication device configured to communicate with an external apparatus, and a display, the method including obtaining information on exposure time of a first advertisement content output on the display; providing identification information corresponding to the first advertisement content to a server through the communication device; obtaining advertisement information related to the first advertisement content through the communication device; and obtaining a second advertisement content based on the obtained advertisement information through the communication device.

### [BRIEF DESCRIPTION OF THE DRAWINGS]

Other aspects, characteristics, and advantages of embodiments according to the disclosure will become clearer from the following description described with reference to the accompanying drawings. In the accompanying drawings:
FIG. 1 is a diagram for illustrating an electronic system according to an embodiment of the disclosure;
FIG. 2 is a block diagram illustrating a configuration of an electronic apparatus according to an embodiment of the disclosure;
FIG. 3 is a block diagram illustrating a configuration of an electronic apparatus according to an embodiment of the disclosure;
FIG. 4 is a block diagram illustrating a configuration of a server according to an embodiment of the disclosure;
FIG. 5 is a diagram for illustrating an updating operation of an advertisement content according to an embodiment of the disclosure;
FIG. 6 is a diagram for illustrating an example of a screen including an advertisement content according to an embodiment of the disclosure;
FIG. 7 to FIG. 9 are diagrams for illustrating a method of obtaining time information of an advertisement content according to an embodiment of the disclosure;
FIG. 10 is a sequence diagram for illustrating an updating operation of an advertisement content according to an embodiment of the disclosure;
FIG. 11 is a flow chart for illustrating a selecting operation of an advertisement content according to an embodiment of the disclosure; and
FIG. 12 is a flow chart for illustrating a method for controlling an electronic apparatus according to an embodiment of the disclosure.

### [DETAILED DESCRIPTION]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents, and/or alternatives of the embodiments of the disclosure. Also, with respect to the detailed description of the drawings, similar components may be designated by similar reference numerals.

Further, in describing the disclosure, in case it is determined that detailed explanation of related known functions or features may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Also, the terms used in the disclosure are used only to explain specific embodiments, and are not intended to limit the scope of the disclosure. Further, singular expressions include plural expressions, unless defined obviously differently in the context.

In addition, in the disclosure, expressions such as "have," "may have," "include," and "may include" denote the existence of such characteristics (e.g.: elements such as numbers, functions, operations, and components), and do not exclude the existence of additional characteristics.

Further, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Also, the expressions "first," "second," and the like used in the disclosure may describe various elements regardless of any order and/or degree of importance. In addition, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that an apparatus is "specifically designed to" in terms of hardware.

Instead, under some circumstances, the expression "an apparatus configured to" may mean that the apparatus "is capable of" performing an operation together with another apparatus or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Also, in the embodiments of the disclosure, 'a module' or 'a part' may perform at least one function or operation, and may be implemented as hardware or software, or as a combination of hardware and software. Also, a plurality of 'modules' or 'parts' may be integrated into at least one module and implemented as at least one processor, excluding 'a module' or 'a part' that needs to be implemented as specific hardware.

In addition, operations performed by a module, a program, or other components according to the various embodiments may be executed sequentially, in parallel, repetitively, or heuristically. Or, at least some of the operations may be executed in a different order or omitted, or other operations may be added.

Meanwhile, various elements and areas in the drawings were illustrated schematically. Accordingly, the technical idea of the disclosure is not limited by the relative sizes or intervals illustrated in the accompanying drawings.

Meanwhile, an electronic apparatus according to various embodiments of the disclosure may include at least one of, for example, a smartphone, a tablet PC, a desktop PC, a laptop PC, or a wearable device. A wearable device may include at least one of an accessory-type device (e.g.: a watch, a ring, a bracelet, an ankle bracelet, a necklace, glasses, a contact lens, or a head-mounted-device (HMD)), a device integrated with fabrics or clothing (e.g.: electronic clothing), a body-attached device (e.g.: a skin pad or a tattoo), or an implantable circuit.

Also, in some embodiments, an electronic apparatus may include at least one of, for example, a television, a digital video disk (DVD) player, an audio, a refrigerator, an air conditioner, a cleaner, an oven, a microwave oven, a washing machine, an air purifier, a set top box, a home automation control panel, a security control panel, a media box (e.g.: Samsung HomeSync^{™}, Apple TV^{™}, or Google TV^{™}), a game console (e.g.: Xbox^{™}, PlayStation^{™}), an electronic dictionary, an electronic key, a camcorder, or an electronic photo frame. Meanwhile, among the aforementioned electronic apparatuses, an apparatus including a display may be referred to as a display apparatus. Meanwhile, an electronic apparatus according to the disclosure may be a set top box or a PC that provides images to a display apparatus even if it does not include a display.

Hereinafter, an embodiment according to the disclosure will be described in detail with reference to the accompanying drawings, such that a person having ordinary knowledge in the technical field to which the disclosure pertains can easily carry out the embodiment.

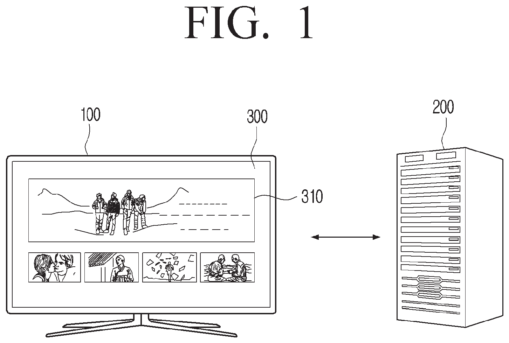

FIG. 1 is a diagram for illustrating an electronic system according to an embodiment of the disclosure.

Referring to FIG. 1, an electronic system according to the disclosure is a system that targets and provides an advertisement that a user may be interested in, in the case of providing an advertisement to a user. Specifically, in case a user selected an advertisement that is currently seen, or maintained a focus (or viewing) during a specific time for the advertisement, the electronic system enables advertisement retargeting by displaying another associated advertisement by using an advertisement ID of the advertisement.

Here, 'an advertisement ID' is an identification number granted to each advertisement content. Such an advertisement ID may consist of a combination of a campaign identification number + an advertisement location + a content identification number. That is, even in the case of advertisements for the same product, if the contents or the display locations of the advertisements are different, the advertisement IDs may be different. Accordingly, if an advertisement ID can be figured out, it can be figured out what kind of advertisement the advertisement is, in which area the advertisement is displayed, etc.

For the aforementioned operation, the electronic system according to the disclosure may include an electronic apparatus 100 and a server 200. In the illustrated example, it was illustrated that the electronic system includes only one electronic apparatus and only one server, but in actual implementation, the electronic system may include a plurality of servers and a plurality of electronic apparatuses. Also, in the illustrated example, the electronic apparatus 100 and the server 200 were illustrated in a form of being directly connected to each other, but in actual implementation, it is also possible that the electronic apparatus 100 and the server 200 are connected through another device such as a router, etc. Further, in actual implementation, it is also possible that the server 200 and the electronic apparatus 100 are implemented as one apparatus and operate.

The server 200 may manage an advertisement to be displayed on the electronic apparatus 100. Specifically, the server 200 may manage information regarding an advertisement content to be displayed on the electronic apparatus 100, an inventory area wherein the advertisement content will be displayed, information on the expiration time of the advertisement, the number of times of exposure of the advertisement, etc., and store information on the advertisement content (referred to as advertisement information hereinafter) accordingly.

Here, 'an inventory area' is information on an area wherein an advertisement will be displayed, and it may be information on a specific area of a home screen. Such an inventory area may also be referred to as an advertisement location, an advertisement exposure area, an advertisement display area, etc.

Also, 'information on the expiration time' may be time information corresponding to a period during which an advertisement is exposed according to a contract with the advertiser. Here, the information on the expiration time may be related to a campaign ID in an advertisement ID explained above.

In addition, information such as 'the number of times of exposure of an advertisement' may include the number of times that each advertisement was exposed, the exposure time at the time of each exposure, or time information in each electronic apparatus such as a focus time, etc., or statistics information according to each time information.

Further, 'a content' consists of images, audio, or a combination thereof, and includes information that can be provided to a user visually, auditorily, or audiovisually through an electronic apparatus. For example, a content may include a voice content, a music content, an image content, a video content, a widget content, a web page, etc.

Also, 'an image' may include visual information in various forms. Here, an image may include a still image and a dynamic image (or, a video).

In addition, 'a video' may include visual information in various forms that indicates a movement of a thing (or, an object) by using a plurality of consecutive still images.

Further, an image may include a horizontal image of which width is longer than the height (e.g., a landscape image, a horizontal image), a vertical image of which height is longer than the width (e.g., a portrait image, a vertical image), etc. according to the ratio. As an example, a horizontal image may include an image in a ratio of 16:9, and a vertical image may include an image in a ratio of 9:16. However, the specific numbers are merely an example for the convenience of explanation, and the disclosure is obviously not limited thereto.

An image according to an embodiment may include various resolutions according to the number of pixels constituting the image (multiplication of the number of pixels in a horizontal direction and the number of pixels in a vertical direction). For example, an image may include a high resolution (FHD (1920×1080), 8K (7680×4320), etc.) image and a low resolution (640×480, etc.) image, etc. according to the resolution.

According to an embodiment of the disclosure, each of a plurality of still images included in a video may mean a frame (or, an image frame).

According to an embodiment, a video may consist of a plurality of frames, and each of the plurality of frames may correspond to one screen output by an electronic apparatus. According to an embodiment, the number of frames (or, the number of screens) output by an electronic apparatus for one second is referred to as a frame rate, and a frame rate can be expressed as frames per second (fps) or a Hertz (Hz) unit. According to an embodiment, a video of 60 fps may mean a video including 60 frames during 1000ms.

Also, 'a screen' includes images displayed on a display of an electronic apparatus. An image may also be referred to as a term such as a frame, etc. On a screen, various types of objects such as icons, texts, photos, videos, widgets, etc., may be displayed.

Further, 'a screen' may include various types of screens such as a lock screen, a home screen, a gaming hub, an application execution screen, a web browser screen, etc. A lock screen may include a screen that receives inputs of user manipulations such as an input of a password, a touch, etc., to enter a home screen. A home screen is a screen that is displayed on the display as a default according to the operation system of the electronic apparatus in case an application is not being executed, or an application is being executed as a background, and it may also be referred to as a main screen, a wallpaper, an unlock screen, etc. An application execution screen may include a screen that is rendered by execution of an application. A web browser screen may include a screen wherein a web page received from a web server by execution of the web browser is displayed.

When the server 200 is requested to provide new advertisement information from the electronic apparatus 100, the server 200 may select an advertisement, and provide information on the selected advertisement (i.e., advertisement information) to the electronic apparatus 100.

Here, the server 200 may store history information of advertisements displayed on the electronic apparatus 100, and provide advertisement information corresponding to advertisements not displayed on the electronic apparatus 100 based on the advertisement history information to the electronic apparatus 100.

In the case of storing advertisement history of a user or an electronic apparatus as above, an advertisement that the user may be interested in can be provided, and thus the selection rate of the advertisement can be further improved.

However, recently, due to reinforcement of protection of personal information, users feel repulsive about storing viewing history or history of interest, etc., of a user in the server 200. Accordingly, each manufacturer needed a method of providing an advertisement that a user may be interested in, even in case advertisement reproduction history is not memorized in each apparatus.

According to the disclosure, when a request of new advertisement information as described above is received while history is not stored, time information such as the viewing time (or the exposure time) of a user for each advertisement currently displayed on the electronic apparatus can be provided together, and an advertisement can be selected by using such information.

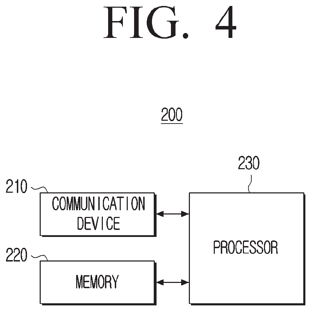

Specifically, the server 200 may obtain exposure time information of each advertisement from the electronic apparatus 100, select an advertisement based on the obtained exposure time information, and provide advertisement information regarding the selected advertisement to the electronic apparatus 100. The detailed configuration and operations of the server 200 as above will be described below in FIG. 4.

The electronic apparatus 100 is an apparatus that generates an image including an advertisement content, and it may be an apparatus that includes a display, or an apparatus that provides an image to a display apparatus. For example, the electronic apparatus 100 may be a TV, a laptop, a PMP, a tablet PC, a kiosk device, etc. including a display, and it may also be a set top box, etc. not including a display.

The electronic apparatus 100 may receive advertisement information from the server 200, and obtain an advertisement content corresponding to the received advertisement information and store the content. Here, the electronic apparatus 100 may obtain an advertisement content from the server 200. For example, an advertisement content may be included in the aforementioned advertisement information. Alternatively, URL information (or address information) wherein an advertisement content can be obtained may be included in the aforementioned advertisement information, and the electronic apparatus 100 may obtain an advertisement content by accessing the URL address by using the URL information included in the advertisement information.

Then, the electronic apparatus 100 may display a pre-stored advertisement content. Specifically, when the electronic apparatus 100 displays a screen 300 including a predetermined advertisement area (or an inventory) 310, the electronic apparatus 100 may include the pre-stored advertisement content in the inventory and display the content.

Such a screen may be a home screen 300. However, in actual implementation, it may be applied to various screens such as a gaming hub, an execution screen of an application, etc., as well as a home screen.

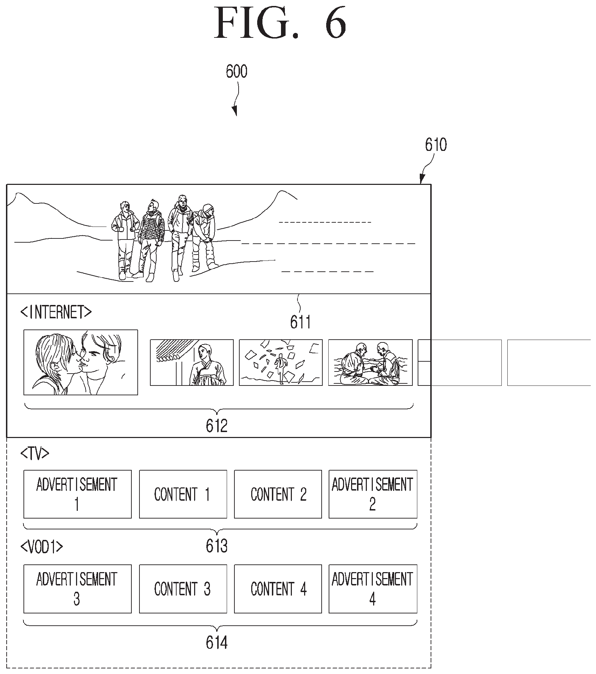

Also, a home screen and a screen wherein an advertisement content is displayed as described above may have a plurality of advertisement areas, and each advertisement area may have the same size, or have different sizes. Examples of a home screen will be described below with reference to FIG. 6.

In case a pre-stored advertisement content was provided to a user, the electronic apparatus 100 may provide exposure time information for each advertisement to the server 200, and update the stored advertisement content to a new advertisement content. Here, the updated new advertisement content may be an advertisement that was selected in the server without any association to the previous advertisement, but an associated advertisement may be included based on the user's state of interest (i.e., the viewing time) for the previous advertisement.

Meanwhile, in actual implementation, all pre-stored advertisement contents may be replaced, but in case advertisements which were set to be exposed a plurality of times were not exposed by greater than or equal to the aforementioned number of times, only some of the stored advertisement contents may be replaced.

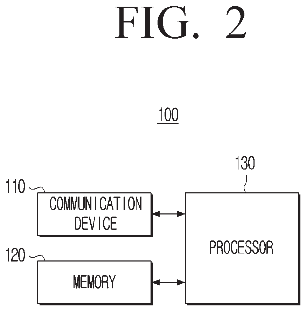

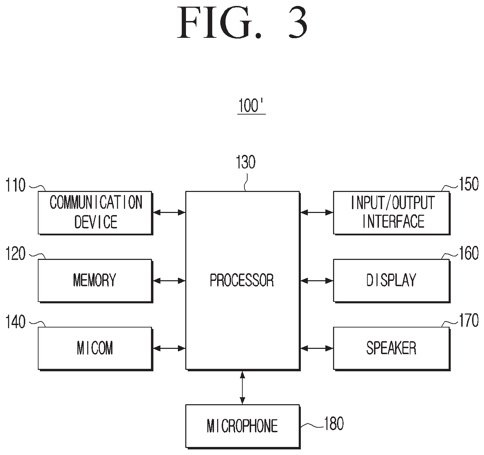

The detailed configuration and operations of the electronic apparatus 100 will be described below with reference to FIG. 2 or FIG. 3.

Meanwhile, in illustrating and explaining FIG. 1, it was illustrated that the electronic apparatus 100 directly displays an advertisement content, but in actual implementation, the electronic apparatus 100 may generate an image including an advertisement content, and the generated image may be displayed on a separate display apparatus.

Also, in FIG. 1, it was explained that the server provides only advertisement information to the electronic apparatus, and the electronic apparatus obtains advertisement contents corresponding to each advertisement based on the advertisement information, i.e., it was explained that the server does not directly provide an advertisement content to the electronic apparatus, but in actual implementation, the server may include an advertisement content in the advertisement information, and provide it to the electronic apparatus.

FIG. 2 is a block diagram illustrating a configuration of an electronic apparatus according to an embodiment of the disclosure.

Referring to FIG. 2, the electronic apparatus 100 may include a communication device 110, memory 120, and a processor 130.

The electronic apparatus 100 as above has a plurality of operation states. For example, the operation states may be a first state wherein all of general operations of the electronic apparatus 100 can be performed, and a second state wherein the electronic apparatus 100 operates by lower power consumption than in the first state. Here, the operation states may be referred to as operation modes.

Here, the first state is a state wherein the electronic apparatus 100 operates while power is supplied to all components inside the electronic apparatus 100, and it may be referred to as a general state, a normal state, a general mode, a normal mode, etc.

Also, the second state is a state wherein the electronic apparatus 100 operates by lower power consumption than in the first state, and is a mode wherein power is not supplied to some components inside the electronic apparatus 100, or limited power is supplied to some components inside the electronic apparatus 100. The second state as above may be referred to as a power saving state, a power saving mode, etc. Meanwhile, in the above, it was explained that the electronic apparatus 100 includes only two states, but in actual implementation, the electronic apparatus 100 may have three or more states. For example, the aforementioned second state may be divided into a first power saving state and a second power saving state according to the size of power consumption.

The communication device 110 is a component that performs communication with various types of external apparatuses according to various types of communication methods. The communication device 110 may include a Wi-Fi module, a Bluetooth module, an infrared communication module, and a wireless communication module, etc. Here, each communication module may be implemented in a form of at least one hardware chip.

A Wi-Fi module and a Bluetooth module may perform communication by a Wi-Fi method and a Bluetooth method, respectively. In the case of using a Wi-Fi module or a Bluetooth module, various types of connection information such as an SSID and a session key is transmitted and received first, and connection of communication is performed by using the information, and various types of information can be transmitted and received thereafter.

An infrared communication module performs communication according to an infrared Data Association (IrDA) technology of transmitting data to a near field wirelessly by using infrared rays between visible rays and millimeter waves.

A wireless communication module may include at least one communication chip that performs communication according to various wireless communication protocols such as Zigbee, 3rd Generation (3G), 3rd Generation Partnership Project (3GPP), Long Term Evolution (LTE), LTE Advanced (LTE-A), 4th Generation (4G), 5th Generation (5G), etc. other than the aforementioned communication methods.

Other than the above, the communication device 110 may include at least one of a local area network (LAN) module, an Ethernet module, or a wired communication module that performs communication by using a pair cable, a coaxial cable, an optical fiber cable, or an ultra wide-band (UWB) module, etc.

According to an embodiment, the communication device 110 may use the same communication module (e.g., a Wi-Fi module) for communicating with an external apparatus such as a remote control and an external server.

According to another embodiment, the communication device 110 may use different communication modules (e.g., a Wi-Fi module) for communicating with an external apparatus like a remote control and an external server. For example, the communication device 110 may use at least one of an Ethernet module or a Wi-Fi module for communicating with an external server, and use a BT module for communicating with an external apparatus such as a remote control. However, this is merely an example, and the communication device 110 may use at least one communication module among various communication modules in the case of communicating with a plurality of external apparatuses or external servers.

Meanwhile, in actual implementation, the communication device 110 may not only receive a user's control command through a remote control, but also receive a user's control command through a user terminal apparatus (i.e., a user's smartphone).

The communication device 110 may receive advertisement information. Specifically, the communication device 110 may request new advertisement information to the server, and receive advertisement information in response to the request. Here, the advertisement information may include information on an address wherein an advertisement content is provided, size information of an advertisement content, information on an inventory (or location information) to be displayed in a home screen, information on the advertisement expiration time (or information on the time when an advertisement can be displayed), information on the number of times of exposure, an advertisement ID, etc.

Here, the information on the advertisement expiration time is information on the time when the advertisement does not need to be exposed anymore, and it may include only date information, or include date and time information together. Here, the time may be information indicating a specific date or hour, and may also be a relative value (e.g., 24 hours from downloading, etc.).

Also, a request of new advertisement information as described above may include information corresponding to the pre-stored advertisement information. Specifically, in case an advertisement content corresponding to the pre-stored advertisement information was exposed to the user (or in case the advertisement was displayed), the communication device 110 may perform the aforementioned request of new advertisement information by transmitting information on the exposed advertisement content to the server. Accordingly, the server 200 may store the history of the advertisements displayed on the electronic apparatus 100, and it is possible to provide new advertisement information that was not displayed on the electronic apparatus 100 based on the stored advertisement history.

Here, according to the disclosure, not only information on a case wherein an advertisement was exposed, but also information on the exposure time may be provided to the server 200. For example, the exposure time information may include information on a first time corresponding to the time during which the advertisement content was displayed on the screen, and information on a second time during which the advertisement content was focused in case the advertisement content was focused by the user.

Here, the first time information may also be expressed as the time during which the advertisement content was displayed on the display. Also, the second time information may also be expressed as the time during which the focus was maintained on the advertisement content output on the display.

Here, focusing of the advertisement content may be a case wherein the current menu bar (or the cursor) stayed on the advertisement content while the user was moving the menu for selecting a content. Also, in case the advertisement content is in a situation as described above (i.e., in case the cursor is located on the advertisement content (or within a predetermined distance)), there may be a case wherein a video corresponding to the advertisement content was automatically reproduced as the content came to be located in the center of the screen. That is, there may be a case wherein the user is watching the current advertisement video without a separate additional manipulation in response to reproduction of the advertisement video.

Such advertisement information may be received from the server 200 as illustrated in FIG. 1, but in actual implementation, it is also possible that different pieces of advertisement information are received through a plurality of servers but not one server. Also, the disclosure may be implemented in a form wherein the function of the server 200 in FIG. 1 is directly performed by the electronic apparatus 100.

Also, the communication device 110 may receive an advertisement content. Specifically, the communication device 110 may receive an advertisement content by using address information included in the advertisement information. Such an advertisement content may be an image, and it may also be a video. In this aspect, the aforementioned advertisement content may be referred to as an advertisement image, an advertisement video, etc., and it may also be referred to as expressions such as a promotion content, a publicization content, a poster, a catchphrase, a product content, a service content, etc.

Meanwhile, hereinafter, for promoting easy explanation, an advertisement content that was received in the first place will be referred to as a first advertisement content, and an advertisement content that was obtained based on the exposure time of the first advertisement content will be referred to as a second advertisement content.

Also, the communication interface 110 may receive not only advertisement contents, but also information or contents that are necessary for providing various types of applications and services of the electronic apparatus 100 from an external apparatus.

Meanwhile, as operations such as wake-up, etc., of the electronic apparatus 100 should be performed by a control command of a remote control or an external apparatus even when the electronic apparatus 100 is in a power saving state (or the second state), the communication device 110 needs to perform operations not only in a normal mode but also in a power saving state. Accordingly, the communication device 110 may operate as power is supplied not only in the first state but also in the second state.

Here, 'wake-up' is an operation for converting the mode of the electronic apparatus 100 from the first mode to the second mode, and it may include, for example, an operation for converting from a stand-by mode to a general mode or an operation for converting from a general mode to a voice recognition mode, etc. Here, wake-up may include an operation of uttering a specific word, an operation of selecting a specific button of a remote control for controlling the electronic apparatus, an operation of taking a specific motion, etc. Also, the wake-up may be referred to as a trigger, activation, etc.

Meanwhile, in case the communication device 110 includes a plurality of communication modules (e.g., a Wi-Fi module, an infrared communication module), only some communication modules among the plurality of communication modules may operate in the power saving state.

The memory 120 may be implemented as internal memory such as ROM (e.g., electrically erasable programmable read-only memory (EEPROM)), RAM, etc., included in the processor 130, or implemented as separate memory from the processor 130. In this case, the memory 120 may be implemented in the form of memory embedded in the electronic apparatus 100, or implemented in the form of memory that can be attached to or detached from the electronic apparatus 100 according to the use of stored data. For example, in the case of data for driving the electronic apparatus 100, the data may be stored in memory embedded in the electronic apparatus 100, and in the case of data for an extended function of the electronic apparatus 100, the data may be stored in memory that can be attached to or detached from the electronic apparatus 100.

The memory 120 stores an advertisement content. Also, the memory 120 stores advertisement information. Here, the memory 120 may vary the storage location of the received advertisement content according to the operation state of the electronic apparatus 100. Specifically, in case the electronic apparatus 100 is in a general mode, the memory 120 may store the received advertisement content in volatile memory.

Meanwhile, in case the electronic apparatus 100 converts to a specific power saving state wherein power of the memory is not supplied, an advertisement content stored in volatile memory may be moved to non-volatile memory. Alternatively, as will be described below, in case an advertisement content is stored while the operation state of the electronic apparatus 100 is temporarily converted for updating the advertisement content in the power saving state, the received advertisement content may be directly stored in the non-volatile memory.

Also, the memory 120 may store a home screen and information on a layout constituting the home screen. Here, the layout is a state wherein various graphic elements (e.g., texts, images, etc.) are arranged inside the screen of the electronic apparatus, and in the disclosure, the layout information may store information on a location of a predetermined advertisement area included in the home screen, the size of the advertisement area, etc. Such an advertisement area may be referred to as an inventory.

Meanwhile, there may be a plurality of inventories included in the home screen. In this case, the memory 120 may store a plurality of pieces of advertisement information and a plurality of advertisement contents. Here, the memory 120 may store advertisement contents in a storage space corresponding to the inventories. In the above, only a home screen was illustrated, but the aforementioned home screen may be referred to as a start screen or an initial screen. Also, not only a home screen, but also a screen introducing a specific content or channel, etc., but not a screen corresponding to a specific content (or channel) selected by the user such as a gaming hub, may fall under this.

In addition, the memory 120 may store various types of contents (e.g., a broadcasting content, an application, etc.) that were received through the aforementioned communication device 110.

Further, the memory 120 may store exposure time information for each advertisement content. Here, the exposure time information may be the first time information corresponding to the time during which an advertisement content was exposed on the screen, and the second time information during which an advertisement content was exposed while the user was focusing on the advertisement content, as explained above. Here, in case the advertisement content is a video content, and the advertisement content is selected, or a video corresponding to the advertisement content is automatically reproduced as the advertisement content is located in the predetermined area inside the screen, the aforementioned second time information may also be referred to as the reproduction time.

Meanwhile, the memory embedded in the electronic apparatus 100 may be implemented as at least one of volatile memory (e.g.: dynamic RAM (DRAM), static RAM (SRAM), or synchronous dynamic RAM (SDRAM), etc.) or non-volatile memory (e.g.: one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD)), etc. Also, the memory that can be attached to or detached from the electronic apparatus 100 may be implemented in forms such as a memory card (e.g., compact flash (CF), secure digital (SD), micro secure digital (Micro-SD), mini secure digital (Mini-SD), extreme digital (xD), a multi-media card (MMC), etc.), and external memory that can be connected to a USB port (e.g., a USB memory), etc.

Also, the memory 120 may selectively operate correspondingly to the operation state of the electronic apparatus. For example, in the normal mode, the memory 120 may operate as power is supplied, and in the power saving state, the memory 120 may not operate as power is not supplied. Meanwhile, in case the memory 120 is volatile memory, if the operation state of the electronic apparatus 100 is the power saving state, the memory 120 may perform only a refreshing operation although power is supplied, and may operate by low power consumption.

Meanwhile, in the illustrated example, it was illustrated that the electronic apparatus 100 consists of one memory, but in the case of referring to the memory by dividing the volatile memory and the non-volatile memory, it may be described that the electronic apparatus 100 includes a plurality of memories.

The processor 130 may perform overall control operations of the electronic apparatus 100. Specifically, the processor 130 performs a function of controlling the overall operations of the electronic apparatus 100.

The processor 130 may be implemented as a digital signal processor (DSP) processing digital signals, a microprocessor, and a time controller (TCON). However, the disclosure is not limited thereto, and the processor 130 may include one or more of a central processing unit (CPU), a micro controller unit (MCU), a micro processing unit (MPU), a controller, an application processor (AP), a graphics-processing unit (GPU) or a communication processor (CP), and an ARM processor, or may be defined by the terms. Also, the processor 130 may be implemented as a system on chip (SoC) having a processing algorithm stored therein or large scale integration (LSI), or implemented in the form of a field programmable gate array (FPGA). Further, the processor 130 may perform various functions by executing computer executable instructions stored in the memory. Meanwhile, in FIG. 2, it was illustrated that only one processor is included in the electronic apparatus 100, but in actual implementation, the electronic apparatus 100 may include a plurality of processors (e.g., a CPU + a GPU, a CPU + a DSP).

The processor 130 may determine an operation state of the electronic apparatus 100. For example, in a case wherein there is no input from the user during a predetermined time, or if a case wherein a task was not performed during a predetermined time occurred, or in a case wherein a command for converting to the power saving state was received from the user, the operation state of the electronic apparatus 100 may be determined as the power saving state.

In the above, it was expressed that an operation state is determined, but the aforementioned expression may also be referred to as determining that conversion of an operation state to the power saving state is needed.

Alternatively, the processor 130 may temporarily convert to the normal mode (or another power saving state) for updating an advertisement content through a process that will be described below, and then, when update of the advertisement content is completed, determine conversion to the power saving state.

Meanwhile, if a wake-up command is input from the user, or a wake-up command is received from an external apparatus (e.g., a remote control, etc.) through the communication device 110 in the power saving state, the processor 130 may determine the operation state of the electronic apparatus 100 as the normal mode.

Then, the processor 130 may control each component of the electronic apparatus 100 to correspond to the determined operation state. Specifically, if the operation state of the electronic apparatus 100 is changed to the power saving state, the processor 130 may control each component of the electronic apparatus 100 such that only predetermined components operate.

Also, the processor 130 may perform an operation corresponding to conversion of the operation state of the electronic apparatus 100 as described above. For example, the processor 130 may perform timer setting that is going to be explained below, or an operation of moving the data stored in the volatile memory to non-volatile memory, etc.

In case the operation state of the electronic apparatus 100 is converted to the power saving state, the processor 130 may set a predetermined time for conversion of the operation state of the electronic apparatus 100 such that the advertisement content is updated on the time corresponding to the expiration time of the advertisement content based on the time information included in the information on the advertisement content.

For example, if it is determined that conversion from the normal mode to the power saving state is needed, the processor 130 may set a timer that converts the operation state of the electronic apparatus 100 for updating the advertisement content on the time corresponding to the advertisement expiration time of the advertisement content based on the advertisement time information included in the advertisement information. Here, the timer is a component that notifies the time when a specific time was reached, and it may be referred to as a predetermined time.

If the predetermined time passes while the operation state of the electronic apparatus 100 is the power saving state, the processor 130 may convert the operation state of the electronic apparatus 100. For example, the processor 130 may determine conversion of the operation state based on the timer in the power saving state.

For example, if the current time passed the time set in the timer, the processor 130 may convert the operation state of the electronic apparatus 100 to the normal state (or the first state), or convert it to the power saving state wherein the advertisement content can be updated. For such an operation, the processor 130 may include a plurality of processing cores, and in the power saving state, it may be in a form of performing an operation of checking whether the current time passed the time set in the timer by using only one processing core.

Meanwhile, the feature of checking whether the set time passed may be performed by a different device which is not the processor 130. Such an example will be explained below with reference to FIG. 3.

If the operation state of the electronic apparatus 100 is converted as the time corresponding to the expiration time of the advertisement content passed, the processor 130 may update the advertisement content stored in the memory 120 by receiving an advertisement content corresponding to new information received from the server. For example, if the operation state is converted in the power saving state, the processor 130 may control the communication device 110 to receive new advertisement information from the server.

Then, the processor 130 may control the communication device 110 to receive an advertisement content based on the address information included in the new advertisement information.

When the advertisement content is updated, the processor 130 may convert the operation state of the electronic apparatus 100. Specifically, if update of the advertisement content as described above is completed in case the operation state of the electronic apparatus 100 was converted for updating the advertisement content, the processor 130 may convert the operation state of the electronic apparatus 100 such that the operation state of the electronic apparatus 100 becomes the power saving state (the first state) again.

The processor 130 generates a home screen. Specifically, in case the electronic apparatus 100 woke up, and in case a control command such as display of the home screen was input from the user, the processor 130 may generate a home screen.

Here, the processor 130 may identify whether an advertisement content is stored in the memory 120 and whether the advertisement content can be displayed, and if an advertisement content that can be displayed is stored, the processor 130 may generate a home screen including the advertisement content. Meanwhile, if an advertisement content is not stored in the memory 120, or even through there is an advertisement content stored in the memory but the advertisement has expired, the processor 130 may generate a home screen including a default image (or a default content).

Meanwhile, the home screen may include a plurality of advertisement areas, and thus the processor 130 may generate a home screen including advertisement contents corresponding to each of the plurality of advertisement areas. Here, the processor 130 may check the expiration time of each advertisement content, and generate a home screen including only advertisement contents of which expiration time has not passed. That is, if there is an advertisement content of which expiration time has passed, the processor 130 may generate a home screen by including a default image (or a default video) for an advertisement area (or an inventory) corresponding to the advertisement content.

When the home screen is displayed, the processor 130 may obtain the exposure time of each advertisement content. Here, the exposure time may include information on the first time during which an advertisement content was displayed, and information on the second time during which the focus was maintained on the advertisement content in the image. For example, a case wherein the cursor was maintained on the advertisement content while the cursor was moving on the home screen based on a menu moving command (or a cursor moving command, a screen moving command) of the user, or a case wherein the advertisement content got to be located in a predetermined central area on the home screen may be a state wherein the focus was maintained.

Here, the processor 130 may count the time during which this state was maintained, and use it as the second time information. Also, if it is not a focus state, the processor 130 may make the advertisement content displayed in an image state, and in a focus state, the processor 130 may make a video reproduced. In this aspect, the processor 130 may use the reproduction time of each advertisement content as the second time information.

Also, in the above, it was explained that a video is reproduced in case an advertisement content is located in the center, but even if an image is not located in the center, in case the point (or the cursor) of the user is located on the advertisement content, or the user selected the advertisement content, the advertisement content may be reproduced.

The processor 130 may identify whether update of a pre-stored advertisement content is needed. Specifically, if a home screen including a pre-stored advertisement content was generated and provided to the user, and a screen different from the home screen is currently being displayed, the processor 130 may identify that update of the advertisement content stored in the memory 120 is needed.

In this case, the processor 130 may control the communication device to transmit ID information for each advertisement content included in the previous home screen and exposure time information of each advertisement content to the server 200. In response to this, the server 200 may provide advertisement information including advertisements associated with the advertisements exposed on the previous home screen to the electronic apparatus 100, or provide advertisement information including advertisements having opposite tendencies to the advertisements to the electronic apparatus 100 by using the provided exposure time information, etc. Such an operation will be explained below in FIG. 4.

Here, the processor 130 may provide the two pieces of time information (e.g., the exposure time and the focus time) calculated previously to the server 200 as they are, or provide the information to the server 200 by converting it into one numerical value by using a specific operation formula. Also, in the aforementioned process of calculating as one value, the processor 130 may additionally consider an area wherein an advertisement content is located and its size, whether the user selected it, etc. Also, in the aforementioned process of transmitting the two values, the processor 130 may calculate the focus time based on the aforementioned location and a weight for the area.

Alternatively, if a pre-stored advertisement content was not displayed, but if it is identified that the advertisement content has expired, the processor 130 may identify that update is needed. In such an operation, it may be identified whether an advertisement content has expired by using the advertisement expiration time information inside the advertisement information corresponding to the advertisement content stored in the memory.

Alternatively, if an advertisement content is currently being displayed, and the user viewing time for the advertisement content is greater than or equal to a predetermined time, the processor 130 may identify that display of a new advertisement content related to the advertisement content that is currently being displayed is needed instead of a pre-stored another advertisement content.

In this case, the processor 130 may control the communization device 110 to transmit the aforementioned exposure time information and ID information corresponding to the advertisement content to the server 200. Then, when a new advertisement content is received from the server 200, the processor 130 may make the new advertisement content displayed in an inventory that is currently not displayed among the inventories inside the current home screen. Here, the inventory wherein the new advertisement content will be located may be an inventory which will be displayed the fastest according to the user's moving of the screen, and it may be an inventory located in a location corresponding to an advertisement that the user checked with interest, e.g., the same horizontal axis or vertical axis.

The processor 130 may request and receive new advertisement information. Here, the processor 130 may control the communication device 110 to transmit information on the pre-stored advertisement content (i.e., information that the advertisement content was exposed) to the server 200. The aforementioned transmission of the information on the pre-stored advertisement content may be performed as the aforementioned request of new advertisement information, and it may also be separate transmission distinguished from the aforementioned request. Also, the aforementioned information may be identification information (e.g., the advertisement ID) corresponding to the pre-stored advertisement content.

Here, the aforementioned update of an advertisement content may be performed simultaneously with another operation. For example, if the first image including the pre-stored advertisement content was generated and displayed, and the second image corresponding to an advertisement content was generated and is being displayed by the user's selection afterwards, an updating operation for the pre-stored advertisement content may be performed during the aforementioned generation of the second image (or during the display of the second image).

Meanwhile, such an updating operation may be performed while the electronic apparatus 100 is providing another screen other than a home screen. That is, while the electronic apparatus 100 is displaying a screen corresponding to a content selected by the user after displaying a home screen, the processor 130 may identify whether to update the pre-stored advertisement content, and in case update is necessary, perform the aforementioned updating operation.

Then, the processor 130 may receive a broadcasting content by using address information included in the received advertisement information, and store it in the memory 120. Here, the processor 130 may store the received broadcasting content in a location corresponding to inventory information (the address of the memory, the address of the storage space) based on inventory information in the received advertisement information.

As described above, the electronic apparatus according to the disclosure identifies exposure time information for a displayed advertisement, and provides information in that regard to the server, and thus the server can identify the types or the tendencies of advertisements that the user is interested in.

Meanwhile, in the above, only simple components constituting the electronic apparatus 100 were illustrated and explained, but in actual implementation, various components can be additionally included. Explanation in this regard will be described below with reference to FIG. 3.

FIG. 3 is a block diagram illustrating a configuration of an electronic apparatus according to an embodiment of the disclosure.

Referring to FIG. 3, the electronic apparatus 100' may include a communication device 110, memory 120, a processor 130, a micom 140, an input/output interface 150, a display 160, a speaker 170, and a microphone 180.

Hereinafter, explanation will be described based on the assumption that the electronic apparatus 100' has three operation states, but in actual implementation, the electronic apparatus 100' may be in a form of having only two operation states as explained in FIG. 2.

First, the first state is a state wherein power is supplied to all components inside the electronic apparatus 100', and specifically, it is a state wherein power is supplied to the memory 120 and the processor 130, and it may be referred to as a general state, a normal state, a general mode, a normal mode, etc.

The second state is a state wherein power is not supplied to some components inside the electronic apparatus 100', and specifically, it is a state wherein the electronic apparatus 100 operates while power is not supplied to the memory 120, the processor 130, the input/output interface 150, the display 160, the speaker 170, and the microphone 180, and power is supplied only to the communication device 110 and the micom 140, and it may be referred to as a first power saving state, a suspend mode, a suspend state, a first power saving mode, etc.

The third state is a state wherein power is not supplied to some components inside the electronic apparatus 100', and it may be a state wherein power is not supplied to components in a fewer number than in the second state. For example, the third state is a state wherein power is supplied to the memory 120 and the processor 130, but power is not supplied to the display 160, and it may be referred to as a second power saving mode, a second power saving state, a low power mode, a lower power state, etc. In such a third state, a voice recognition operation wherein the user's voice was input may be performed, or an operation such as updating an advertisement content as described above may be performed.

As the configurations of the communication device 110, the memory 120, and the processor 130 were explained above in FIG. 2, only operations different from FIG. 2 will be explained below.

When a wake-up command is input from an external apparatus during a power saving state of the electronic apparatus 100', the micom 140 may perform conversion of the operation state of the electronic apparatus 100' to the normal state (or a power saving state different from the current power saving state).

When the timer is set, the micom 140 may compare the current hour and the time (or the hour) set in the timer, and identify whether the current hour passed the hour set in the timer. For this, the micom 140 may store the current hour information and the set time information in a register space (or a storage space). Meanwhile, in the above, it was explained that only one time information is set as the timer, but in actual implementation, a plurality of timers may be set in the micom 140, and events that occur when the set time of each timer is reached may be different.

Meanwhile, in the above, it was illustrated and explained that the micom 140 directly includes timer information, or determines whether the predetermined time passed, but the aforementioned predetermined time, etc. may be stored in separate memory (or a register), and the aforementioned determining operation may also be performed in a separate component distinguished from the micom 140. In this case, the aforementioned separate component may be a component that also operates in a power saving state, as explained above.

Also, as explained in FIG. 2, in case the processor operates with a plurality of processor cores, and one of the plurality of processor cores can operate in a power saving state, the aforementioned operation of the micom may be performed by the aforementioned processor core operating in a power saving state.

The input/output interface 150 may be an interface of any one of a high definition multimedia interface (HDMI), a mobile high-definition link (MHL), a universal serial bus (USB), a display port (DP), Thunderbolt, a video graphics array (VGA) port, an RGB port, a D-subminiature (D-SUB), or a digital visual interface (DVI).

The input/output interface 150 may input or output at least one of an audio signal or a video signal. Depending on implementation examples, the input/output interface 150 may include a port outputting only audio signals and a port outputting only video signals as separate ports, or it may be implemented as one port that inputs and outputs both audio signals and video signals.

Also, the input/output interface 150 may provide a video signal corresponding to a screen generated in the electronic apparatus 100' or an audio signal together with the video signal to an external apparatus (e.g., a display apparatus, an STB, etc.).

The display 160 may be implemented as displays in various forms such as a liquid crystal display (LCD), an organic light emitting diodes (OLED) display, a plasma display panel (PDP), etc. Inside the display 160, driving circuits that may be implemented in forms such as an a-si TFT, a low temperature poly silicon (LTPS) TFT, an organic TFT (OTFT), etc., and a backlight unit, etc. may also be included together. Meanwhile, the display 160 may be implemented as a touch screen combined with a touch sensor, a flexible display, a 3D display, etc.

The display 160 may display various kinds of images. For example, the display 160 may display a home screen or an image generated by the processor 130.

The speaker 170 may output a sound. Specifically, the speaker 170 may be a component that outputs various kinds of notification sounds or voice messages as well as various kinds of audio data processed in the input/output interface. Also, the speaker 170 may output result information corresponding to a voice recognition operation that will be described below.

In addition, the speaker 170 may output a notification sound corresponding to conversion of the operation state of the electronic apparatus 100'. For example, in case the electronic apparatus 100' converts from a power saving state (the aforementioned first power saving state or second power saving state) to the normal mode, the speaker 170 may output a notification sound notifying that conversion was performed.

The microphone 180 may receive the user's voice in an activated state. For example, the microphone 180 may be formed as an integrated type integrated to the upper side or the front surface direction, the side surface direction, etc., of the electronic device 100'. The microphone 180 may include various components such as a microphone collecting a user voice in an analogue form, an amp circuit amplifying the collected user voice, an A/D conversion circuit that samples the amplified user voice and converts the user voice into a digital signal, a filter circuit that removes noise components from the converted digital signal, etc.

When a user voice is input through such a microphone 180, the processor 130 may identify the content of the user voice, and perform an operation corresponding to the voice content. Meanwhile, in the above, it was explained that a user voice is input through the microphone 180, but the microphone 180 may be provided in a remote control for controlling the electronic apparatus 100', and a user voice input through the microphone provided in the remote control may be input into the electronic apparatus 100' through the aforementioned communication device 110, and processed.

Meanwhile, if a user voice is input through the remote control in case the electronic apparatus 100' is in a power saving state, the aforementioned micom 140 may determine conversion from the first power saving state to the second power saving state, and process the aforementioned user voice in the second power saving state. Then, if it is identified that a command corresponding to the input user voice is a command waking up the electronic apparatus 100', the processor 130 may convert the operation state of the electronic apparatus 100' from the second power saving state to the normal mode.

Also, the electronic apparatus 100' may not only operate based on a component provided in the electronic apparatus 100' or the remote control, but may also operate according to a control command of the user terminal apparatus. For example, if the electronic apparatus 100' is a TV or a set top box, an application for control of a TV or a set top box is being provided by each manufacturer recently. Such an application may provide a function that enables the user terminal apparatus to be used together with the remote control for the electronic apparatus.

Accordingly, in case the user executed an application for controlling a TV or a set top box by using the user terminal apparatus, the user terminal apparatus may transmit a signal that makes the electronic apparatus 100' converted into a power saving state wherein a waking up or minimal voice recognition operation can be performed.

The electronic apparatus 100' that receives such a signal may be converted from the first power saving state to the second power saving state. When such conversion is performed, the electronic apparatus 100' may identify the expiration period of a pre-stored broadcasting content as described above, and perform an updating operation for the expired broadcasting content.

Afterwards, if the user inputs a voice command through the user terminal apparatus, the electronic apparatus 100' may perform a voice recognition operation and a voice recognition result corresponding thereto by using the voice signal input through the user terminal apparatus.

Also, if the user inputs a power-on command, etc. through the user terminal apparatus, the electronic apparats 100' may perform a control command corresponding thereto based on the control command received through the user terminal apparatus.

Meanwhile, in FIG. 3, it was illustrated and explained that the electronic apparatus 100' includes a display, but if the electronic apparatus 100' is an apparatus such as a set top box that does not include a display, the display component may be omitted. Also, depending on implementation examples, the aforementioned speaker and microphone may be omitted. Further, although not illustrated in FIG. 3, other components (e.g., a camera, a human body detection sensor, etc.) may be further included.

FIG. 4 is a block diagram illustrating a configuration of a server according to an embodiment of the disclosure.

Referring to FIG. 4, the server 200 may include a communication device 210, memory 220, and a processor 230.

The communication device 210 is a component that performs communication with various types of external apparatuses according to various types of communication methods. The communication interface 210 may include a Wi-Fi module, a Bluetooth module, an infrared communication module, and a wireless communication module, etc. Other than the above, the communication device 210 may include at least one of a local area network (LAN) module, an Ethernet module, or a wired communication module performing communication by using a pair cable, a coaxial cable, an optical fiber cable, or an ultra wide-band (UWB) module, etc.

The communication device 210 may receive time information of each advertisement from the electronic apparatus 100. For example, the communication device 210 may receive ID information corresponding to each advertisement displayed on the electronic apparatus 100 and time information of each advertisement from the electronic apparatus 100.

Here, the time information may include the advertisement ID displayed on the electronic apparatus 100 and the exposure time information displayed on each electronic apparatus. Such exposure time information may be expressed as one time value, or expressed as a plurality of time values.

For example, the time information may include the first time information corresponding to the information on the time during which an advertisement was exposed on the electronic apparatus as described above, and the second time information corresponding to the information on the time during which the advertisement was focused on the electronic apparatus. Meanwhile, in actual implementation, values may be corrected based on the aforementioned location and size of an advertisement on the electronic apparatus, whether the user selected the advertisement, etc., or one value may be calculated in consideration of the aforementioned matters, and provided to the server.

The communication device 210 may transmit advertisement information. Specifically, when the communication device 210 receives advertisement time information from each electronic apparatus 100, the communication device 210 may transmit advertisement information including the information on the advertisement selected based on the information to the electronic apparatus 100.

Here, the advertisement information may include information on an address wherein an advertisement content is provided, size information of an advertisement content, information on an inventory (or location information) to be displayed in a home screen, information on the advertisement expiration time (or information on the time when an advertisement can be displayed), information on the number of times of exposure, an advertisement ID, etc.

Also, the communication device 210 may receive information or contents that are necessary for providing various types of applications and services of the server 200 from an external apparatus. In addition, the communication device 210 may receive information on advertisements that can be provided to each electronic apparatus, contents of each advertisement, etc., from an external apparatus.

The memory 220 may be implemented as internal memory such as ROM (e.g., electrically erasable programmable read-only memory (EEPROM)), RAM, etc., included in the processor 230, or implemented as separate memory from the processor 230. In this case, the memory 220 may be implemented in the form of memory embedded in the server 200, or implemented in the form of memory that can be attached to or detached from the server 200 according to the use of stored data. For example, in the case of data for driving the server 200, the data may be stored in memory embedded in the server 200, and in the case of data for an extended function of the server 200, the data may be stored in memory that can be attached to or detached from the server 200.

Also, the memory 220 may store information on a home screen used in the electronic apparatus and a layout constituting the home screen. Accordingly, the processor 230 that will be described below may select advertisements to be applied to each inventory.

In addition, the memory 220 may store information on advertisements, and store information on campaigns, information on advertisement contents, and information on advertisement attributes of each advertisement. That is, the memory 220 may store various types of information necessary for selecting advertisements and generating advertisement information.

The processor 230 may perform overall control operations of the server 200. Specifically, the processor 230 performs a function of controlling the overall operations of the server 200.

When the processor 230 receives time information from the electronic apparatus, the processor 230 may select advertisements to be displayed on the electronic apparatus based on the time information.

For example, if exposure time for a specific advertisement is greater than or equal to a predetermined first value, the processor 230 may select advertisements wherein at least one of attribute information or classification related to the advertisement content is similar. For example, in case the user has history of having viewed an advertisement related to a specific car for a long time, the processor 230 may select other car advertisements or other advertisements related to the car.

In contrast, if exposure time for a specific advertisement is smaller than a predetermined second value, i.e., if it is identified that the user does not have any interest in the displayed advertisement, the processor 230 may select advertisements wherein at least one of an attribute or classification related to the advertisement smaller than the predetermined second value is different. For example, if the displayed advertisement is an advertisement for an action movie, and there is no response at all for the advertisement, the processor 230 may select an advertisement related to a romance movie or a romance drama having opposite attributes to an action movie.

Here, for the predetermined values, regular numerical values may simply be used, or a ratio such as the exposure time or the focus time/the exposure time may be used. For example, in a case wherein the exposure time is one minute and the focus time is two seconds, and in a case wherein the exposure time is three seconds and the focus time is two seconds, the user interest in the two cases may not be the same. Accordingly, for calculation of the predetermined values explained above, the aforementioned ratio, etc., may be considered.

Meanwhile, in the above, it was explained that other advertisements are selected based on one advertisement, but the aforementioned operation may be performed based on the focus time of the user for each advertisement based on a plurality of advertisements.

For example, in a home screen, a plurality of inventories may be arranged, and a plurality of advertisement contents may be arranged and exposed to the user. Accordingly, the electronic apparatus may transmit IDs of each advertisement and the exposure time, the focus time, etc., of each advertisement for each of the plurality of advertisements. Accordingly, if the focus time for the first advertisement is greater than or equal to a predetermined time, the processor 230 may determine that the attributes for the advertisement are positive, and in contrast, if the focus time is smaller than the predetermined time, the processor 230 may determine that the attributes for the advertisement are negative, and select advertisements by summing up these attributes.

For example, if the attributes of the first advertisement are action, a movie, and red tone colors, and the user's focus in this regard is very low, the processor 230 may determine the attributes to be negative. Also, if the attributes of the second advertisement are romance, a drama, and blue tone colors, and the user's focus in this regard is high, the processor 230 may determine the attributes to be positive.

If such operations are performed for all of the exposed advertisements, the server 200 may identify that the user is positive about romance, a drama, and blue tone colors, and negative about action, a movie, and red tone colors. Accordingly, the server 200 may select advertisements related to romance, a drama, and blue tone colors.

The content regarding attributes as above is an example, and attributes may be determined by a general concept, or their degree may be set by an advertiser, etc., who grants attributes of the advertisement. For example, considering a red color and a blue color as two extremes, or considering action and romance explained above as two extremes is an example, and in case the two concepts were set as different concepts in such an example, the server 200 may perform the aforementioned selecting operation by regarding the two concepts as different concepts as explained above.

Alternatively, the processor 230 may use the overall characteristics of the plurality of advertisements as described above, or use only the user's action for a specific advertisement. For example, if an advertisement ID is identified, the location wherein the advertisement is displayed can be identified. However, if an exposure area of a specific advertisement is not big, and the user's focus time is long even though it is a small area, the processor 230 may determine that the user interest for the advertisement is high.

Accordingly, the processor 230 may not determine identically for each advertisement, and select another advertisement by further emphasizing attributes for the advertisement by adding a weight in the aforementioned selection process based on the location wherein the advertisement is displayed and whether the user selected the advertisement.

Also, the processor 230 may consider the aforementioned weight based on the location wherein the advertisement is displayed. That is, in case the user's interest was maintained for a long time (e.g., in case the reproduction time of the advertisement was long, or the user focus for the advertisement was maintained for a long time) even though the advertisement is an advertisement not displayed on the home screen, e.g., an advertisement displayed in an area such as a general web page, the processor 230 may grant a high weight.

Alternatively, in an advertisement displayed in a gaming hub, in case the focus time of the user for a specific game is long, the processor 230 may grant a weight. Meanwhile, in actual implementation, the processor 230 may consider other factors as well as the focus time. For example, the location of a cursor such as a mouse (or a pointer) may be used, and in this case, the time during which the cursor was maintained on a specific image may be considered. Also, in case the possible reproduction time for an advertisement content supports, for example, only a short preview such as three seconds, the focus time and the possible reproduction time may be different. In response to each case as above, the time of a preview, etc., may also be an item for the weight as described above.

Meanwhile, in the aforementioned advertisement selection process, for digitization regarding a process of identifying attributes of interest (or fields of interest) based on the viewing time of a previously displayed advertisement, a lookup table may be used, or a distance model used in contract learning may also be used.

Also, the processor 230 may generate advertisement information based on selected advertisements, and control the communication device 210 such that the generated advertisement information is transmitted to the electronic apparatus 100.

Here, when locating the selected advertisements in the plurality of inventories, the processor 230 may generate advertisement information by selecting contents of the advertisements to be displayed in each inventory in consideration of the locations of each inventory. Also, in arranging the advertisements selected as such, the processor 230 may grant priorities for each advertisement, and arrange the advertisement contents in the inventory areas exposed earlier based on the priorities.

Also, when generating advertisement information, the processor 230 may generate advertisement information in a form of hierarchically arranging advertisements of the same type. For example, in case advertisement areas may appear in the order of A, B, C due to the structure of the home screen of the electronic apparatus, the processor 230 may generate advertisement information wherein advertisements of the same advertiser are arranged regarding A, B, C, and an advertisement that may cause the user's curiosity is arranged in A, and a little more specific advertisement is arranged in B, and a further specific advertisement is arranged in C.

For example, in the case of a car advertisement, an advertisement content that shows only a silhouette of the car may be arranged in the A area, and an advertisement content that shows dynamic driving of the car may be arranged in the B area, and an advertisement content that shows information on a store wherein the car can be purchased may be arranged in the C area.

As described above, the server 200 according to an embodiment of the disclosure may select advertisements to be displayed on the electronic apparatus based on the exposure time information for advertisements provided from each electronic apparatus, without separately managing the history of each electronic apparatus, and thus exposure of personal information can be minimized, and at the same time, selection of advertisements that the user may be interested in is possible.

In the above, it was explained that advertisements that are associated or are opposite to one another are selected from the viewpoint of classification, but in actual implementation, it is also possible that attributes of each advertisement are divided as positive, neutral, and negative, or are classified into colors such as red tone or blue tone, and attributes that are associated or are opposite to one another are selected based on the colors.

The server 200 according to an embodiment of the disclosure may perform advertisement selection based on the advertisement IDs and the time information provided by each electronic apparatus, without storing the advertisement viewing history in each electronic apparatus. Accordingly, advertisement targeting can be improved while personal information is protected.

Also, as advertisement information is generated such that a plurality of advertisement contents for the same advertisement are hierarchically arranged, the probability of selection of the advertisement can be improved by gradually increasing the user's interest.

Meanwhile, in the above, only simple components constituting the server 200 were illustrated and explained, but in actual implementation, various components can be additionally provided.

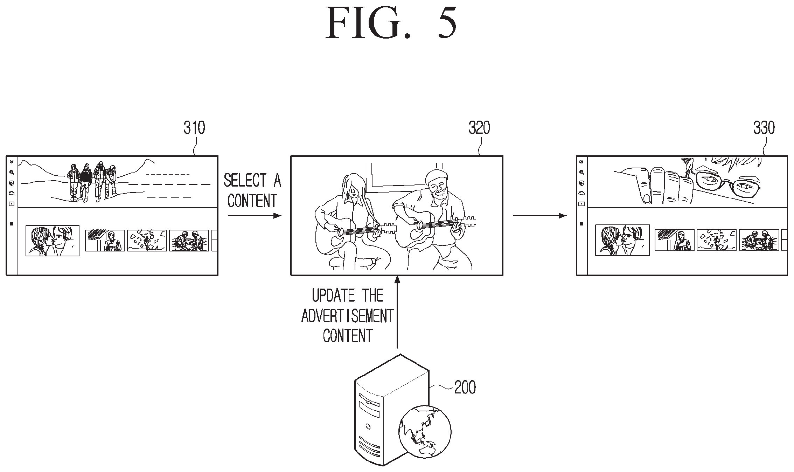

FIG. 5 is a diagram for illustrating an updating operation of an advertisement content according to an embodiment of the disclosure.

Referring to FIG. 5, the electronic apparatus 100 displays a home screen 310. Such a home screen 310 may include a video (or an image) corresponding to a pre-stored advertisement content. Meanwhile, in the illustrated example, it was illustrated that advertisement contents are displayed in some areas of the home screen, but in actual implementation, a form wherein the entire screen includes only a video corresponding to an advertisement content is possible.

Afterwards, when the user selects a specific application or selects a specific content, a second screen 320 including a video corresponding to the content selected by the user may be displayed. As illustrated in the drawing, the first screen and the second screen are different screens. In the illustrated example, it was illustrated that the second screen includes only a video corresponding to a broadcasting content, but the second screen may display additional information (e.g., chatting information, shopping information, broadcasting information) together with the broadcasting content.

When the first screen is converted into the second screen as above, the broadcasting content included in the first screen was already exposed to the user, and thus update for the pre-stored advertisement content is needed. Specifically, after the user's command for converting into the home screen was input, i.e., on a time point when display of the home screen is needed, if a new advertisement content is sought to be obtained, there may not be sufficient time necessary for obtaining an advertisement content included in the home screen.

Accordingly, when conversion from the first screen into the second screen is performed, the electronic apparatus 100 may request advertisement information for update of the advertisement content to the server 200. Here, the electronic apparatus 100 may provide the information obtained in the previous first screen to the server 200. Specifically, the electronic apparatus 100 may provide the advertisement IDs of each exposed advertisement and the information on the exposure time to the server 200.

The server 200 may select advertisements based on the provided advertisement IDs and exposure time information, and provide advertisement information to the electronic apparatus 100 by using the selected advertisements. Accordingly, the electronic apparatus 100 may update the advertisement content in the memory.

As described above, the electronic apparatus 100 updates and stores an advertisement content during display of the second screen 320. Accordingly, if the user inputs a command for converting into the home screen, the electronic apparatus 100 may generate a home screen 330 including the pre-stored advertisement content without delay and display the screen. Through such an operation, whenever an opportunity for exposing an advertisement occurs, the electronic apparatus 100 can always expose a new advertisement.

Also, in the aforementioned process, information on each displayed advertisement and the exposure time for each advertisement is provided to the server 200, and thus it is possible to select advertisements that the user may be interested in the server 200 and provide them to the electronic apparatus 100.

Meanwhile, in the illustrated example, it was illustrated that advertisement contents are always displayed, but if advertisement contents are not stored, or the pre-stored advertisement content has expired, the electronic apparatus 100 may display a home screen including a default image instead of advertisements.

Also, even in case a new advertisement content was received during exposure of the home screen wherein the default image is displayed, the electronic apparatus 100 may not reflect the newly received advertisement content, and maintain the display of the current home screen including the default image. That is, an advertisement content stored in the aforementioned state may be reflected on a time point when the next home screen is displayed.

Specifically, in case advertisements displayed in the advertisement areas (i.e., the inventories) or the default image are changed after display of the home screen, the user may feel repulsive. In this aspect, for preventing repulsive feeling of the user, the electronic apparatus 100 according to the disclosure may not change the information of the inventory areas inside the home screen after the home screen is displayed.

In contrast, as illustrated in the drawing, the entire areas of the home screen are not displayed on the screen, but only some areas are displayed on the screen. Accordingly, if the inventory displaying the updated advertisement content is a location that was not displayed to the user yet, the aforementioned change can be applied. Also, such a situation may automatically be applied if the user's viewing time for a specific advertisement content is long. Such an operation will be described below in FIG. 6.

FIG. 6 is a diagram for illustrating an example of a screen including an advertisement content according to an embodiment of the disclosure.

Referring to FIG. 6, the home screen 610 is a screen that can be displayed when the electronic apparatus is turned on or a home screen command is input. Such a home screen may provide information (or a thumbnail) on applications previously installed in the electronic apparatus 100 and/or information (or a thumbnail) recommended by each of the applications.

Here, 'a thumbnail' is an image representing a content, and it may have smaller capacity than a general image. Here, a thumbnail may include a preview image, a sample image, an album image, etc.

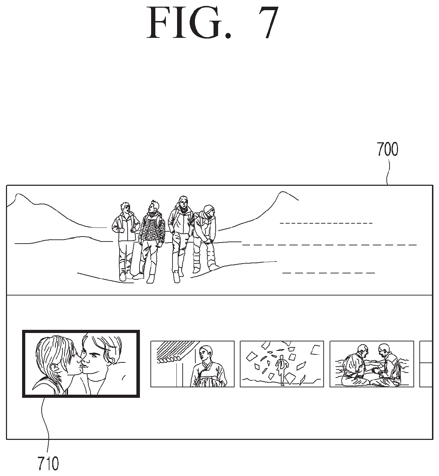

Meanwhile, the home screen 610 that is initially displayed may be the upper left area of the home screen layout. Specifically, the home screen layout 600 may consist of a larger area than the home screen as illustrated in the drawing, and when the user scrolls the screen, the lower areas of the home screen layout that are currently not displayed may be displayed. Such inventory areas may be located in a plurality of areas, and inventories may have different sizes for each area. Meanwhile, the sizes of the inventories in each area may be the same, but they may also be in different forms. For example, as will be explained below from FIG. 7, in case the user selected an inventory, or the area was focused, the area may become bigger than the surrounding areas for distinctively indicating that the area was selected.

In the illustrated example, the home screen layout is divided into a first area 611 to a fourth area 614.

The first area 611 is located in the upper area of the home screen layout.

The second area 612 is located below the first area 611, and may have a plurality of inventory areas. In the plurality of inventory areas of the second area 612, popular contents and advertisement contents selected from Internet applications may be arranged.

Also, the third area 613 is located below the second area 612, and may have a plurality of inventory areas. In the plurality of inventory areas of the third area 613, popular contents and advertisement contents selected from TV applications may be arranged.

In addition, the fourth area 614 is located below the third area 613, and a plurality of inventory areas may be located. In the plurality of inventory areas of the fourth area 614, popular contents and advertisement contents selected from VOD applications may be arranged.

In the illustrated example, a home screen layout consisting of four areas was illustrated, but in actual implementation, a home screen layout may consist of fewer than three areas, or consist of five or more areas. Also, in the illustrated example, it was illustrated that areas are arranged in the order of the Internet, a TV, and a VOD, but in actual implementation, there may be various forms, and areas may be arranged based on the use history (the recent use history or the use time) of each application of the user.

Also, in each area, a plurality of inventories may be arranged on a horizontal axis, and as illustrated in the second area, an inventory in a specific area may be arranged to be longer than the length of the horizontal axis of the screen depending on cases.

In such a case, a menu area may be moved based on the user's scroll or movement of the cursor (or movement of the direction), and with respect to a currently located inventory, the screen may be displayed to be bigger than the adjacent inventories in left and right directions. Here, the electronic apparatus may reproduce a video corresponding to the currently located inventory. For example, in case an advertisement content is located in the current inventory, a video corresponding to the advertisement content may be reproduced. In the case of a general content, a preview video for the content may be reproduced.

Meanwhile, in actual implementation, an advertisement displayed in the first area 611 and an advertisement displayed in the second area 612 may be advertisements of the same advertiser. In this case, the advertisement content displayed in the first area 611 and the advertisement content displayed in the second area 612 may be the same. Alternatively, even in the case of advertisements of the same advertiser, the advertisement content displayed in the first area 611 and the advertisement content displayed in the second area 612 may be different. For example, the sizes, the picture quality, etc., of the contents may be different, and the types of the contents may also be different.

Also, in the illustrated example, it was illustrated that advertisements and contents that will be displayed in the third area 613 and the fourth area 614 that are currently not displayed on the home screen are designated in advance, but in actual implementation, in case display of the inventories has not proceeded, change may be performed in real time.

For example, it is assumed that an advertisement content is located in the second area 612, and the user located the cursor or a menu on an inventory area wherein the advertisement content is located. In this case, a video for the current advertisement content is reproduced, and in case the user is viewing the advertisement, an additional menu may not be moved. That is, if the current advertisement is not stopped and is being reproduced continuously during a specific time, it may be deemed that the user is viewing the reproduction of the advertisement. If the user is viewing the video for the advertisement content for greater than or equal to a predetermined time (e.g., ten seconds), the electronic apparatus 100 may request another advertisement associated with the advertisement to the server 200 and obtain it. Then, the electronic apparatus 100 may change the advertisement of 'Advertisement 1' in the third area 613 from the previous advertisement content to the newly obtained advertisement.

Accordingly, when the user finishes viewing the current advertisement, and moves the menu below, the user gets to see the associated advertisement that is located in 'Advertisement 1' in the third area 613.

Meanwhile, in the above, it was explained that the advertisement in the lower inventory was changed based on exposure of the advertisement content in the second area. However, in actual implementation, as explained above, the advertisement in the first area 611, the advertisement in the second area 612, and the advertisement in the third area 613 may be hierarchically located in advance to induce a specific advertisement effect.

Meanwhile, such a home screen is an example, and a home screen in a form different from the illustrated form may be applied. Also, a layout of a home screen is not fixed, and it may be changed according to an implementation process or provision by the manufacturer, or changed according to customization of the user.

Meanwhile, in the disclosure, it was explained that an advertisement content that will be included in an inventory included in a home screen is not obtained in real time and displayed, but an advertisement content is downloaded in advance, and the pre-stored advertisement content is displayed on a time point when the home screen is displayed. Such an operation of downloading an advertisement content to be displayed in an inventory in advance may be referred to as pre_fetch.

Meanwhile, in the illustrated example, it was illustrated that an advertisement content is displayed in a specific area (inventory) of a home screen, but in actual implementation, such an operation may be applied to various cases wherein advertisements can be displayed in a specific area of an application provided by the electronic apparatus 100, etc. other than a home screen.

For example, if it is set that the electronic apparatus 100 displays a screen of an application that was being executed right before, but not the home screen at the time of turn-on, and if an advertisement area exists on the screen of the application, the aforementioned operation can be applied for the advertisement area.

Meanwhile, the layout of the home screen illustrated in FIG. 6 is an example, and the aforementioned layout may be applied to suit the characteristics of an application according to the characteristics, etc., of the apparatus to which the disclosure is applied. For example, in the case of an environment wherein the user can scroll or touch the screen through a touch screen but not a remote control, a varied form may be applied to the arrangement form such as the number of inventories displayed on the screen.

FIG. 7 to FIG. 9 are diagrams for illustrating a method of obtaining time information of an advertisement content according to an embodiment of the disclosure. Specifically, they are diagrams for illustrating the aforementioned focus of an advertisement.

As illustrated in the drawings, in a display apparatus such as a TV, it is possible to select a specific area inside a screen, or move on each area according to a manipulation of a remote control (e.g., the user's push of a direction change button). For example, if the user pushes a direction key for the first time on a home screen, the cursor (or a menu) may be located on a previously selected location (e.g., the first inventory 710).

As above, if the cursor (or a menu) is located on the location of a specific content, the electronic apparatus may reproduce a video corresponding to the content located in the area. For example, if the content is a general broadcasting content, a preview video for the broadcasting content may be displayed, and if the content is an advertisement content, a preview video for the advertisement content may be displayed.

For example, in the illustrated example, if each of the first inventory and the third inventory in the second area is an advertisement content, in case the screen as in FIG. 7 is being displayed, as both of the first advertisement located in the first inventory and the third advertisement located in the third inventory are currently being exposed on the screen, the electronic apparatus may count the exposure time.

In particular, if the first advertisement is currently focused, the electronic apparatus may separately count the time of focus.

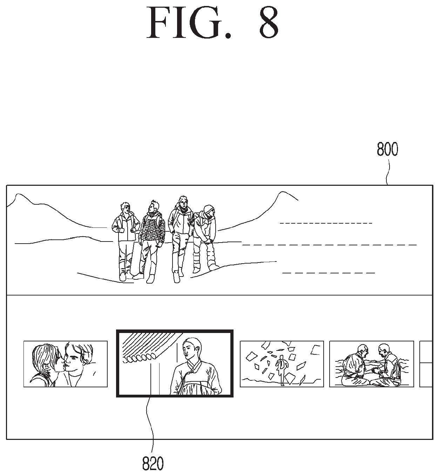

In such a state, if the user moves the menu to the right side, as illustrated in FIG. 8, the second inventory area 820 may be enlarged and displayed. As explained above, the first advertisement and the third advertisement are still being exposed on the screen in this state, and thus the exposure time may continuously be counted. However, as the focus on the first advertisement was stopped due to movement of the cursor, counting of the focus time for the first advertisement may be stopped.

If the user moves the menu again to the left side as illustrated in FIG. 7, as in the situation in FIG. 7 above, counting for the first advertisement may be added again.

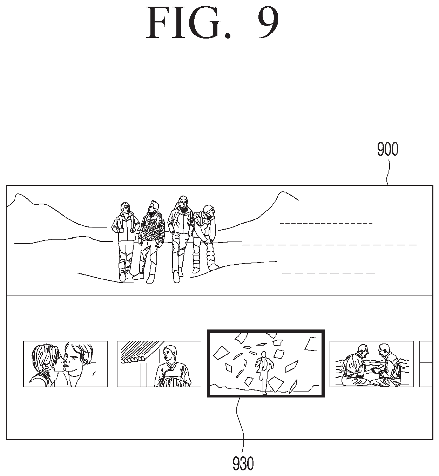

In contrast, in case the user moved the menu to the right side but not the left side, as illustrated in FIG. 9, the third inventory area 930 may be enlarged and displayed. In this case, the first advertisement and the third advertisement are also currently being exposed, and thus exposure counting may be continued, and as the third advertisement is being focused, a video for the third advertisement may be reproduced. Also, counting for the focus time for the third advertisement may be started.

Meanwhile, if the user selects the content located in the second inventory, and an image corresponding to the specific content is displayed on the home screen, all the counting operations for each advertisement content as explained above may be stopped, and the aforementioned counting information (or time information) for each advertisement may be stored in the memory.

Then, for updating the advertisement contents in the home screen, the electronic apparatus 100 may transmit the aforementioned time information and advertisement IDs to the server.

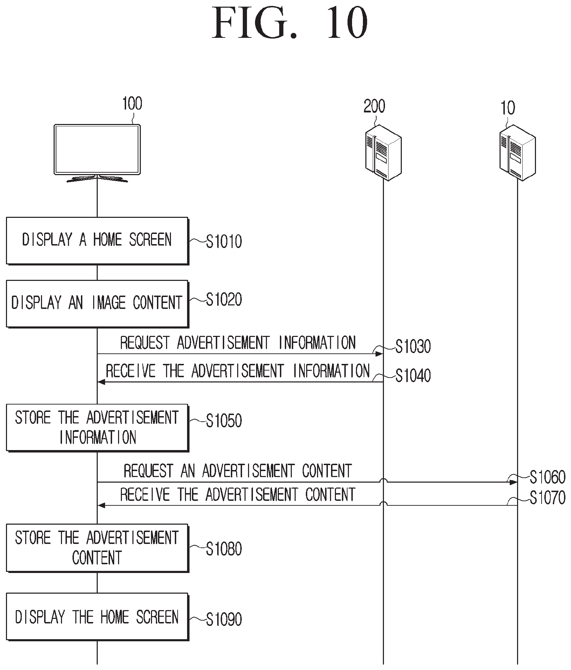

FIG. 10 is a sequence diagram for illustrating an updating operation of an advertisement content according to an embodiment of the disclosure.

Referring to FIG. 10, an electronic system may include an electronic apparatus 100, a first server 200, and a second server 10.

Here, the first server 200 is a server that stores advertisement information, and the second server 10 is a server that stores advertisement contents. In the illustrated example, it was explained that only two servers are included, but in actual implementation, there may be a plurality of second servers 10 according to the types of the advertisements provided by the first server 200. Also, in the illustrated example, it was illustrated and explained that servers providing advertisement information and advertisement contents are divided, but in actual implementation, it is also possible that one server 10 provides advertisement information and advertisement contents.

First, the electronic apparatus 100 displays a home screen in operation S1010. Here, the home screen may be a screen including a pre-stored advertisement content. Here, the electronic apparatus 100 may count the exposure time and the focus time for each advertisement content inside the home screen.

After displaying such a home screen, the electronic apparatus 100 may display an image corresponding to specific broadcasting (or a content) by a control command by the user in operation S1020.

If the home screen is converted into another screen as above, the advertisements included in the home screen have been exposed to the user. Accordingly, if there is a need to display another advertisement on the next home screen, a content for the advertisement to be displayed on the next home screen is required.

Accordingly, the electronic apparatus 100 may request advertisement information to the first server 200 in operation S1030. Here, the electronic apparatus 100 may include advertisement IDs and exposure time information corresponding to each advertisement displayed on the electronic apparatus 100, and provide the information to the first server 200.

Meanwhile, in actual implementation, time information for all advertisements may be provided to the first server 200, and a form wherein time information only for meaningful advertisements is provided to the first server 200 is also possible. For example, a form wherein the aforementioned time information only for advertisements satisfying specific conditions such as exposure time being greater than or equal to a specific time, and focus time being greater than or equal to the second time is provided to the first server 200 is also possible.

In response to this, the first server 200 may provide the advertisement information to the electronic apparatus 100 in operation S1040. Here, the electronic apparatus 100 may provide information on the exposed advertisements to the first server 200. According to such provision, the first server 200 can identify advertisements used in the electronic apparatus 100, and can select advertisements that can be used in the electronic apparatus 100 (or advertisements that do not have history of having been displayed) in the stored advertisement information, and provide information on the selected advertisements to the electronic apparatus 100 as advertisement information.

The electronic apparatus 100 may obtain the advertisement information, and obtain an advertisement content based on the address information included in the advertisement information. Specifically, the electronic apparatus 100 may request an advertisement content to the second server 10 corresponding to the address information, and obtain the content in operations S1060 and S1070.

As described above, the electronic apparatus 100 may obtain a new advertisement and advertisement information, and store them in the memory in operation S1080. Meanwhile, there may be storage address corresponding to specific inventories of the home screen, and a received advertisement content may be stored in the storage address corresponding to the inventory locations (or types) included in the address information. For example, if there are two advertisement inventories in the home screen, and a received advertisement content is a content corresponding to the first inventory, the received advertisement content may be stored in the location corresponding to the first inventory.

Afterwards, when the user inputs a command for conversion to the home screen, the home screen including the new advertisement content may be displayed in operation S1090.

Meanwhile, a series of operations S1030 - S1080 of obtaining advertisement information and an advertisement content, and storing them in the memory as described above may proceed in a state of maintaining an operation of displaying an image content. That is, the electronic apparatus 100 may perform the aforementioned update of the advertisement in the background part while performing an operation of displaying an image content.

Meanwhile, after displaying the home screen including the new advertisement content, in case the user inputs a command for converting the electronic apparatus 100 to a power saving state, or conversion to a power saving state is needed as the user did not input a separate command during a predetermined time, the electronic apparatus 100 may obtain an advertisement content to be applied to the home screen that will be displayed when it is converted from the power saving state to the normal mode in the same form as in the aforementioned process, set a timer corresponding to expiration information of the obtained advertisement content, and enter the power saving state afterwards.

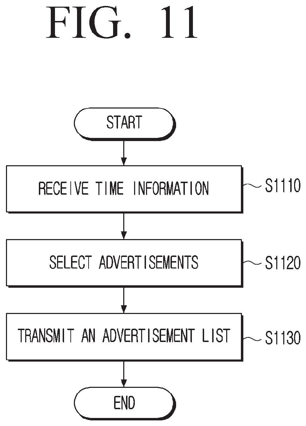

FIG. 11 is a flow chart for illustrating a selecting operation of an advertisement content according to an embodiment of the disclosure.

Referring to FIG. 11, time information is received from an electronic apparatus in operation S1110. The time information may include advertisement IDs displayed on the electronic apparatus and exposure time information displayed on each electronic apparatus.

Such exposure time information may be expressed as one time value, or expressed as a plurality of time values. For example, the exposure time information may include the first time information corresponding to the time information that an advertisement was exposed in the electronic apparatus as described above, and the second time information corresponding to the time information that an advertisement was focused in the electronic apparatus.

Meanwhile, in actual implementation, values may be corrected based on the aforementioned location and size of an advertisement on the electronic apparatus, whether the user selected the advertisement, etc., or one value may be calculated in consideration of the aforementioned matters, and provided to the server.

When the time information is obtained as described above, the server device may select advertisements to be displayed on the electronic apparatus based on the time information in operation S1120. For example, if exposure time for a specific advertisement is greater than or equal to a predetermined first value, the server 200 may select advertisements wherein attribute information and classification information related to the advertisement content are similar. For example, in case the user has a history of having viewed an advertisement related to a specific car for a long time, the server 200 may select other car advertisements or other advertisements related to the car.

In contrast, if exposure time for a specific advertisement is smaller than a predetermined second value, i.e., if it is identified that the user does not have any interest in the displayed advertisement, the server 200 may select advertisements of which attributes and classifications are opposite to the advertisement smaller than the predetermined second value.

When such selection is completed, the server may generate advertisement information (or an advertisement list) including the advertisement IDs and the address information, etc. of the selected advertisements, and provide the generated address information to the electronic apparatus 100.

As described above, the server 200 according to an embodiment of the disclosure may select advertisements to be displayed on the electronic apparatus based on the exposure time information for advertisements provided from each electronic apparatus, without separately managing the history of each electronic apparatus, and thus exposure of personal information can be minimized, and at the same time, selection of advertisements that the user may be interested in is possible.

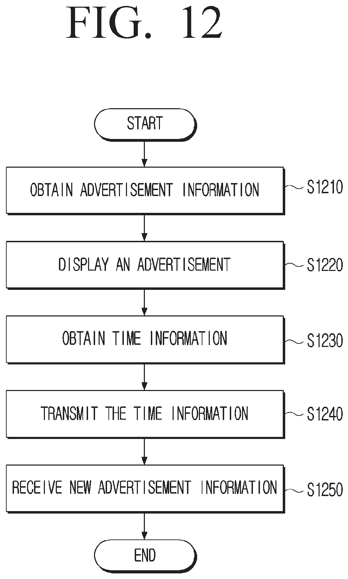

FIG. 12 is a flow chart for illustrating a method for controlling an electronic apparatus according to an embodiment of the disclosure.

Referring to FIG. 12, advertisement information is obtained from the server in operation S1210. Such acquisition of advertisement information may proceed after a home screen is displayed, and it may also be performed in case the display time of the advertisement contents that are stored while the electronic apparatus is in a power saving mode has expired.

Then, an advertisement content may be obtained based on the obtained advertisement information, and stored in the memory. For example, new advertisement information may be received by using address information included in the new advertisement information, and the received new advertisement content may be stored in the memory.

Then, when a predetermined event occurs, a screen including the advertisement content may be output or displayed in operation S1220.

While the screen including the advertisement content is being output or displayed as above, the exposure time of each advertisement may be stored in operation S1230. Here, the exposure time information may include information on a first time during which the advertisement content was displayed in the image and information on a second time during which a focus was maintained on the advertisement content in the image.

For example, the first time information is the time during which an image corresponding to the advertisement content (including both of an image state and a video reproduction state) was exposed on the screen, and the second time information is the time during which the cursor was maintained on the advertisement content while the cursor was being moved based on a menu moving command of the user.

Meanwhile, the second time information as above may also be referred to as a video reproduction time in case the advertisement content is a video. For example, if the cursor is located on a specific advertisement content during a process of a menu moving command of the user, a video for the advertisement content may be reproduced. That is, in case the focus of the user is maintained on the advertisement content, if a video is reproduced, the video reproduction time of the advertisement content may be used as the second time.

Then, exposure time information of the advertisement content is obtained in operation S1230. Specifically, after the screen is exposed, if the screen is converted to a content reproduction screen, exposure time information for each advertisement content on the previous home screen may be identified. Here, the aforementioned time information is not simply used, but correction may be applied to the aforementioned numerical value. For example, a weight corresponding to at least one of a selection command for the advertisement content, the video reproduction time of the advertisement content, the screen size of the advertisement content, or the display location of the advertisement content may be granted.

Then, the obtained exposure time information and ID information of the advertisement content are provided to the server in operation S1240. Such a providing operation may be performed on two kinds of time points. For example, while the first image corresponding to the home screen is being displayed, if the image is converted to the second image corresponding to a specific content selected by the user, the providing operation may be performed during output (or display) of the second image.

Alternatively, in case it was identified that the user has high interest in a specific advertisement content, e.g., in case the user is viewing a specific advertisement content for five seconds or more (or in case the user selected the advertisement content), for instance, an advertisement content similar to or related to the advertisement content may be immediately requested, and accordingly, the obtained advertisement content may be immediately reflected to the home screen. That is, a newly received advertisement content may be arranged in an advertisement area located in an area that is currently not displayed on the home screen.

Then, advertisement information including an advertisement content related to the advertisement content is obtained in operation S1250. For example, in the aforementioned advertisement information, if the exposure time of the previous advertisement content is greater than or equal to a predetermined first value, address information of another advertisement content wherein attribute information and classification information related to the advertisement content are similar may be included. Alternatively, if the exposure time of the advertisement content is smaller than a predetermined second value, the advertisement information may include address information of an advertisement content wherein attribute information and classification information related to the advertisement content are opposite.

When advertisement information is obtained as above, an advertisement content may be obtained by using the address information included in the advertisement information, as explained above. Meanwhile, in actual implementation, an advertisement content may be included in the advertisement information.

As described above, the control information of the electronic apparatus may provide information on an advertisement that the user is currently interested in to the server, and the server may provide another advertisement that the user may be interested in based on such information, and thus it is possible to provide an advertisement that the user may be interested in even when the server does not manage the user history for the electronic apparatus. Also, as the server can identify not only an advertisement that the user may be interested in, but also a case wherein the user is not interested, it is possible to provide an advertisement for which the user's advertisement selection rate or interest is high.

Meanwhile, methods according to at least some of the aforementioned various embodiments of the disclosure may be implemented in forms of applications that can be installed on conventional electronic apparatuses.

Also, the methods according to at least some of the aforementioned various embodiments of the disclosure may be implemented just with software upgrade, or hardware upgrade for a conventional electronic apparatus.

In addition, the methods according to at least some of the aforementioned various embodiments of the disclosure may be performed through an embedded server provided on an electronic apparatus, or an external server of at least one of electronic apparatuses.

Meanwhile, according to an embodiment of the disclosure, the aforementioned various embodiments may be implemented as software including instructions stored in machine-readable storage media, which can be read by machines (e.g.: computers). The machines refer to apparatuses that call instructions stored in a storage medium, and can operate according to the called instructions, and the apparatuses may include an electronic apparatus according to the aforementioned embodiments (e.g.: an electronic apparatus 100). In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'a non-transitory storage medium' only means that the storage medium is a tangible device, and does not include signals (e.g.: electromagnetic waves), and the term does not distinguish a case wherein data is stored semi-permanently in a storage medium and a case wherein data is stored temporarily. For example, 'a non-transitory storage medium' may include a buffer wherein data is temporarily stored. Also, according to an embodiment, the methods according to the various embodiments disclosed herein may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or distributed directly on-line (e.g.: download or upload) through an application store (e.g.: Play Store^{™}), or between two user apparatuses (e.g.: smartphones). In the case of on-line distribution, at least a portion of a computer program product (e.g.: a downloadable app) may be stored in a storage medium readable by machines such as the server of the manufacturer, the server of the application store, and the memory of the relay server at least temporarily, or may be generated temporarily.

In addition, the various embodiments of the disclosure may be implemented as software including instructions stored in machine-readable storage media, which can be read by machines (e.g.: computers). The machines refer to apparatuses that call instructions stored in a storage medium, and can operate according to the called instructions, and the apparatuses may include an electronic apparatus according to the aforementioned embodiments (e.g.: an electronic apparatus 100).

In case an instruction is executed by a processor, the processor may perform a function corresponding to the instruction by itself, or by using other components under its control. An instruction may include a code that is generated or executed by a compiler or an interpreter.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic apparatus comprising:
a communication device configured to communicate with an external apparatus;
memory; and
at least one processor is configured to:
control the communication device to obtain a first advertisement content,
control the communication device to provide information on exposure time of the obtained first advertisement content and identification information corresponding to the obtained first advertisement content to a server, and
based on receiving advertisement information related to the obtained first advertisement content, control the communication device to obtain a second advertisement content based on the received advertisement information.

2. The electronic apparatus of claim 1, further comprising:
a display,
wherein the at least one processor is configured to control the display to output the obtained first advertisement content, and
the information on the exposure time includes:
information on a first time during which the obtained first advertisement content was output on the display, and
information on a second time during which a focus was maintained on the obtained first advertisement content output on the display.

3. The electronic apparatus of claim 2, wherein
the at least one processor is configured to:
based on change of a location of a cursor on the display by a received user input, obtain the information on the second time corresponding to a time during which the cursor was maintained on a location of the obtained first advertisement content output on the display.

4. The electronic apparatus of claim 2, wherein
the obtained advertisement content is a video content, and
the at least one processor is configured to:
based on a cursor output on the display being located by a received user input on a location of the obtained first advertisement content, controlling the video content corresponding to the first advertisement content to be output on the display.

5. The electronic apparatus of claim 1, wherein
the at least one processor is configured to:
obtain the exposure time information based on a weight corresponding to at least one of a selection command for the obtained first advertisement content, video reproduction time of the obtained first advertisement content, screen size of the obtained first advertisement content, or a display location of the obtained first advertisement content.

6. The electronic apparatus of claim 1, wherein
the received advertisement information includes:
based on the exposure time of the obtained first advertisement content being greater than a predetermined value, address information of a second advertisement content having at least one of an attribute or classification corresponding to the obtained first advertisement content.

7. The electronic apparatus of claim 1, wherein
the received advertisement information includes:
based on the exposure time of the obtained first advertisement content being smaller than a predetermined value, address information of a second advertisement content having at least one of an attribute or classification different from the obtained first advertisement content.

8. The electronic apparatus of claim 1, further comprising:
a display,
wherein the at least one processor is configured to:
based on the exposure time of the obtained first advertisement content being greater than a predetermined value, control the communication device to request and obtain a new advertisement content related to the obtained first advertisement content, and
based on receiving a user input corresponding to movement to an area of no output, control the display to output the obtained new advertisement content output.

9. The electronic apparatus of claim 1, wherein
the at least one processor is configured to:
during generation of an image corresponding to a content selected by a user, control the communication device to transmit identification numbers and exposure time information of each advertisement content included in an image including the obtained first advertisement content to the server,
control the communication device to obtain updated advertisement content, and
store the obtained updated advertisement content in the memory.

10. The electronic apparatus of claim 9, further comprising:
a display,
wherein the image including the obtained first advertisement content is a home screen output on the display, and
the obtained first advertisement content is located in a predetermined area inside the home screen.

11. A method of controlling an electronic apparatus including a communication device configured to communicate with an external apparatus, and a display, the method comprising:
obtaining information on exposure time of a first advertisement content output on the display;
providing identification information corresponding to the first advertisement content to a server through the communication device;
obtaining advertisement information related to the first advertisement content through the communication device; and
obtaining a second advertisement content based on the obtained advertisement information through the communication device.

12. The method of claim 11, wherein
the information on the exposure time comprises:
information on a first time during which the first advertisement content was output on the display, and
information on a second time during which a focus was maintained on the first advertisement content output on the display.

13. The method of claim 12, wherein
the obtaining the exposure time information includes:
based on change of a location of a cursor on the display by a received user input, obtaining the information on the second time corresponding to a time during which the cursor was maintained on a location of the first advertisement content output on the display.

14. The method of claim 12, wherein
the advertisement content is a video content, and
the method further includes:
based on a cursor on the display being located by a received user input on the location of the first advertisement content, outputting the video content corresponding to the first advertisement content on the display.

15. A non-transitory computer-readable recording medium storing a program for executing a controlling method of an electronic apparatus including a communication device configured to communicate with an external apparatus, and a display, the method comprising:
obtaining information on exposure time of a first advertisement content output on the display;
providing identification information corresponding to the first advertisement content to a server through the communication device;
obtaining advertisement information related to the first advertisement content through the communication device; and
obtaining a second advertisement content based on the obtained advertisement information through the communication device.
